# EUROPÄISCHE PATENTSCHRIFT

(11) **EP 2 910 099 B1**
(45) Veröffentlichungstag und Bekanntmachung des Hinweises auf die Patenterteilung: **31.10.2018**
(21) Anmeldenummer: 15401011.0
(22) Anmeldetag: 20.02.2015
(51) Int. Cl.: A01B 69/00

(54) **VERFAHREN ZUR KALIBRIERUNG EINES GEZOGENEN ODER SELBSTFAHRENDEN NUTZFAHRZEUGS MIT MINDESTENS EINER LENKBAREN ACHSE**
METHOD FOR CALIBRATING A DRAWN OR SELF-PROPELLED UTILITY VEHICLE PROVIDED WITH AT LEAST ONE STEERABLE AXLE
PROCÉDÉ D'ÉTALONNAGE D'UN VÉHICULE UTILITAIRE TRACTÉ OU AUTO-TRACTÉ COMPRENANT AU MOINS UN ESSIEU ORIENTABLE

(30) Priorität: 21.02.2014 DE 102014102302
(43) Veröffentlichungstag der Anmeldung: 26.08.2015
(73) Patentinhaber: CLAAS Saulgau GmbH, 88348 Bad Saulgau (DE)
(72) Erfinder: Frank, Kornelius, 71287 Weissach (DE); Sauter, Stefan, 88529 Zwiefalten (DE)

(56) Entgegenhaltungen:
- EP-A2- 1 873 039
- DE-A1- 3 440 492
- DE-A1-102004 009 465
- DE-A1-102006 006 141
- US-A1- 2013 054 074

## Beschreibung

Die Erfindung betrifft ein Verfahren zur Kalibrierung eines gezogenen oder selbstfahrenden Nutzfahrzeugs mit mindestens einer lenkbaren Achse oder eines Gespanns aus einem selbstfahrenden, als Zugfahrzeug ausgebildeten Nutzfahrzeug und einem gezogenen, als Anhängegerät ausgebildeten Nutzfahrzeug mit mindestens einer lenkbaren Achse. Des Weiteren betrifft die Erfindung eine Steuerungseinrichtung für ein gezogenes oder selbstfahrendes Nutzfahrzeug und ein solches Nutzfahrzeug.

Ein landwirtschaftliches Zuggespann verfügt über ein selbstfahrendes Zugfahrzeug und ein von dem Zugfahrzeug gezogenes Anhängegerät. Beim Zugfahrzeug handelt es sich typischerweise um einen Traktor. Bei dem vom Zugfahrzeug gezogenen Anhängegerät kann es sich um einen Anhänger, einen Ladewagen, einen Schwader, einen Wender, eine Presse oder um ein sonstiges vom Zugfahrzeug gezogenes Anhängegerät handeln. Das Zugfahrzeug sowie das Anhängegerät verfügen jeweils über eine Anhängevorrichtung, wobei das Anhängegerät über seine Anhängevorrichtung an die Anhängevorrichtung des Zugfahrzeugs koppelbar ist. Bei der Anhängevorrichtung des Anhängegeräts handelt es sich typischerweise um eine sogenannte Zugdeichsel. Bei der Anhängevorrichtung des Zugfahrzeugs kann es sich um ein sogenanntes Zugmaul oder um eine Kugelkupplung handeln.

Dann, wenn ein solches landwirtschaftliches Zuggespann in einer Kurvenfahrt betrieben werden soll, wird am Zugfahrzeug von einem Fahrer über ein Lenkrad ein Lenkwinkel an einer gelenkten Achse des Zugfahrzeugs eingestellt. Es sei darauf hingewiesen, dass das Zugfahrzeug sich auch über Kettenlaufwerke oder Raupenlaufwerke fortbewegen kann. Aus der Praxis ist es bereits bekannt, dass auch das landwirtschaftliche Anhängegerät mindestens eine lenkbare Achse aufweisen kann, um hierdurch das Fahrverhalten eines landwirtschaftlichen Zuggespanns zu verbessern.

Typischerweise weist ein landwirtschaftliches Anhängegerät, welches mindestens einer lenkbaren Achse aufweist, eine nicht lenkbare Achse und mindestens eine lenkbare Achse auf, wobei eine lenkbare Achse des Anhängegeräts vor und/oder nach der nicht lenkbaren Achse des Anhängegeräts positioniert sein kann. Ein landwirtschaftliches Anhängegerät kann auch ausschließlich mindestens eine lenkbare Achse aufweisen.

Ein solches landwirtschaftliches Anhängegerät verfügt weiterhin über eine Steuerungseinrichtung, die im aktiven Lenkbetrieb die oder jede lenkbare Achse des Anhängegeräts abhängig von einem Winkel, den eine Längsmittelachse des Zugfahrzeugs und eine Längsmittelachse des Anhängegeräts einschließen, aktiv ansteuert. Dieser Winkel kann mit Hilfe eines der Zugdeichsel des Anhängegeräts zugeordneten Deichselwinkelsensors erfasst werden. Abhängig vom Signal des Deichselwinkelsensors steuert bzw. regelt demnach die Steuerungseinrichtung den Lenkwinkel an der oder jeder lenkbaren Achse des Anhängegeräts.

Um hierbei eine gute Regelqualität bzw. Steuerqualität zu gewährleisten, ist es erforderlich, am Anhängegerät zumindest die Positionen der Endanschläge der oder jeder lenkbaren Achse sowie die Position für die Geradeausfahrt der oder jeder lenkbaren Achse zu kalibrieren.

Hierzu wird nach dem Stand der Technik derart vorgegangen, dass die Endanschläge jeder lenkbaren Achse manuell angefahren und die entsprechenden Positionen dann gespeichert werden. Weiterhin wird an jeder lenkbaren Achse des Anhängegeräts eine Position der Geradeausfahrt eingestellt und gespeichert, wobei diese Position für die Geradeausfahrt an der oder jeder lenkbaren Achse ebenfalls manuell eingestellt wird, typischerweise unter Verwendung eines Hilfsmittels wie zum Beispiel eines Lasers oder eines Ausrichtbalkens. Diese manuelle Kalibrierung ist sehr aufwendig und fehleranfällig.

Solche Probleme bestehen auch bei anderen Zuggespannen z.B. in der Forstwirtschaft oder Bauindustrie. Ferner bestehen diese Probleme auch bei selbstfahrenden Nutzfahrzeugen mit mindestens einer lenkbaren Achse.

Es besteht daher Bedarf daran, die Kalibrierung eines gezogenen oder selbstfahrenden Nutzfahrzeugs, insbesondere eines landwirtschaftlichen Anhängegeräts, bzw. eines Gespanns aus einem selbstfahrenden Zugfahrzeug und einem gezogenen Anhängegerät einfacher und fehlerunanfälliger zu gestalten.

US 2013/0054074 A1 offenbart ein Verfahren zur Lenkwinkel-Kalibrierung, welches während ein Fahrzeug fährt automatisch eine erste und eine zweite maximale Lenkeinschlagposition anfährt, diese speichert und daraus einen Mittelwert bestimmt.

Hiervon ausgehend liegt der vorliegenden Erfindung die Aufgabe zugrunde, ein neuartiges Verfahren zur Kalibrierung eines gezogenen oder selbstfahrenden Nutzfahrzeugs oder eines Gespanns aus einem selbstfahrenden, als Zugfahrzeug ausgebildeten Nutzfahrzeug und einem gezogenen, als Anhängegerät ausgebildeten Nutzfahrzeug mit mindestens einer lenkbaren Achse sowie eine neuartige Steuerungseinrichtung für ein gezogenes oder selbstfahrendes Nutzfahrzeug und ein neuartiges Nutzfahrzeug mit einer solchen Steuerungseinrichtung zu schaffen.

Diese Aufgabe wird durch ein Verfahren nach Anspruch 1 gelöst.

Im Stillstand des Nutzfahrzeugs werden die Endanschläge der oder jeder lenkbaren Achse des Nutzfahrzeugs automatisch angefahren und die Positionen dieser Endanschläge zur Kalibrierung automatisch ermittelt. Für die oder jede lenkbare Achse des Nutzfahrzeugs wird aus den Positionen der Endanschläge durch eine Mittelwertbildung eine vorläufige Position für die Geradeausfahrt der jeweiligen lenkbaren Achse automatisch ermittelt. Dann, wenn während einer Geradeausfahrt des Nutzfahrzeugs in einer Ebene die oder jede lenkbare Achse des Nutzfahrzeugs derart freigegeben ist, das dieselbe insbesondere bedingt durch fahrdynamische Kräfte wie Trägheitskräfte während der Geradeausfahrt passiv einspurt, wird eine endgültige Positionen für die Geradeausfahrt der jeweiligen lenkbaren Achse zur Kalibrierung automatisch ermittelt.

Die Erfindung erlaubt eine automatisierte Kalibrierung der Positionen für die Endanschläge der oder jeder lenkbaren Achse des Nutzfahrzeugs sowie eine automatisierte Kalibrierung der Position für die Geradeausfahrt der oder jeder lenkbaren Achse des Nutzfahrzeugs, wobei die Kalibrierung der Positionen für die Endanschläge im Stillstand des Nutzfahrzeugs und die Kalibrierung der Position für die Geradeausfahrt des Nutzfahrzeugs während einer Geradeausfahrt desselben erfolgt.

Aus den kalibrierten Positionen der Endanschläge der oder jeder lenkbaren Achse wird für jede lenkbare Achse eine vorläufige Position für die Geradeausfahrt durch eine Mittelwertbildung aus den jeweiligen Positionen der Endanschläge automatisch ermittelt.

Vorzugsweise werden im Stillstand des Nutzfahrzeugs die Positionen der Endanschläge über einen Achswinkelsensor der jeweiligen lenkbaren Achse automatisch ermittelt, wobei mit diesen Positionen der jeweilige Achswinkelsensor bezüglich der Endanschläge der jeweiligen lenkbaren Achse automatisch kalibriert wird. Während einer Geradeausfahrt des Nutzfahrzeugs wird die endgültige Position für die Geradeausfahrt über den Achswinkelsensor der jeweiligen lenkbaren Achse automatisch ermittelt, wobei mit dieser Position der jeweilige Achswinkelsensor bezüglich der Geradeausfahrt der jeweiligen lenkbaren Achse automatisch kalibriert wird. Diese Kalibrierung ist einfach und fehlerunanfällig.

Nach einer vorteilhaften Weiterbildung der Erfindung wird ferner eine Position einer Zugdeichsel eines als gezogenes Anhängegerät ausgebildeten Nutzfahrzeugs für die Geradeausfahrt des Anhängegeräts zur Kalibrierung automatisch ermittelt, vorzugsweise derart, dass dann, wenn während einer Geradeausfahrt des Anhängegeräts die oder jede lenkbare Achse des Anhängegeräts freigegeben ist, eine Position der Zugdeichsel für die Geradeausfahrt mit einem Deichselwinkelsensor automatisch ermittelt wird, und dass mit dieser Position der Deichselwinkelsensor bezüglich der Geradeausfahrt des Anhängegeräts automatisch kalibriert wird. Hiermit kann auf einfache und fehlerunanfällige Art und Weise automatisch eine Position der Zugdeichsel für die Geradeausfahrt kalibriert werden.

Die erfindungsgemäße Steuerungseinrichtung ist in Anspruch 6 und das erfindungsgemäße Nutzfahrzeugist in Anspruch 10 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: ein erstes landwirtschaftliches Zuggespann mit einem Zugfahrzeug und mit einem vom Zugfahrzeug gezogenen Anhängegerät in stark schematisierter Ansicht;
- Fig. 2: ein weiteres landwirtschaftliches Zuggespann mit einem Zugfahrzeug und mit einem vom Zugfahrzeug gezogenen Anhängegerät in stark schematisierter Ansicht.

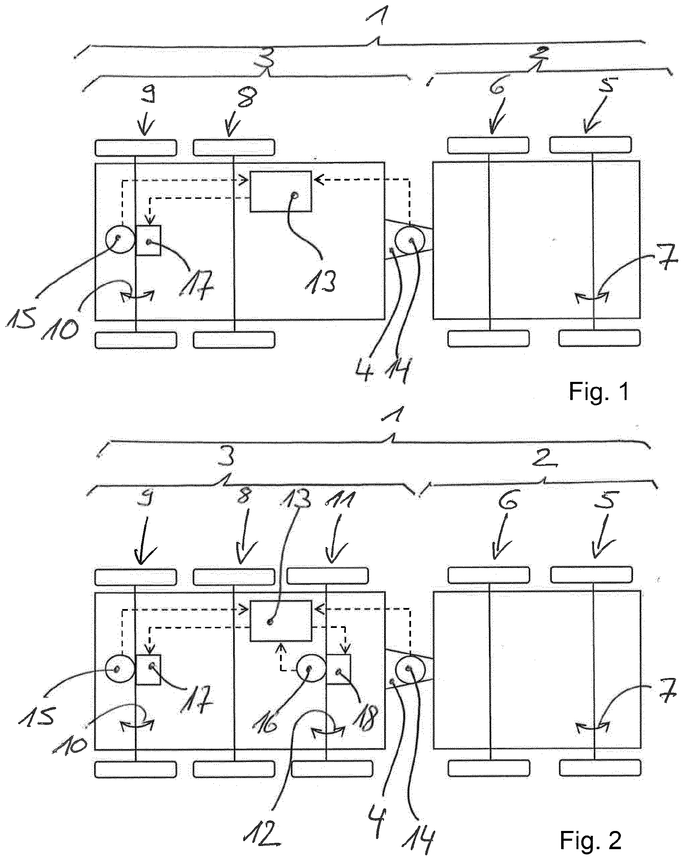

Fig. 1 zeigt ein landwirtschaftliches Zuggespann 1 aus einem landwirtschaftlichen Zugfahrzeug 2 und einem vom Zugfahrzeug 2 gezogenen landwirtschaftlichen Anhängegerät 3.Beim Zugfahrzeug 2 handelt es sich typischerweise um einen Traktor. Beim landwirtschaftlichen Anhängegerät 3 handelt es sich typischerweise um einen Anhänger oder Ladewagen.

Das Anhängegerät 3 ist mit dem Zugfahrzeug 2 gekoppelt, nämlich über eine Zugdeichsel 4, die an eine korrespondierende, nicht gezeigte Anhängevorrichtung des Zugfahrzeugs 2, zum Beispiel an eine Kugelkupplung oder ein Zugmaul, gekoppelt ist.

Das Zugfahrzeug 2 verfügt über eine lenkbare Vorderachse 5 und eine nicht lenkbare Hinterachse 6. Die Lenkbarkeit der Vorderachse 5 des Zugfahrzeugs 2 ist durch einen Doppelpfeil 7 dargestellt.

Das Anhängegerät 3 verfügt im Ausführungsbeispiel der Fig. 1 über zwei Achsen, nämlich über eine in Zugrichtung gesehen vordere, nicht-lenkbare Achse 8 und eine in Zugrichtung hinter dieser nicht lenkbaren Achse 8 positionierte, lenkbare Achse 9, deren Lenkbarkeit durch einen Doppelpfeil 10 dargestellt ist.

Fig. 2 zeigt demgegenüber ein Ausführungsbeispiel, in welchem das Anhängegerät 3 über eine weitere lenkbare Achse 11 verfügt, die in Zugrichtung vor der nicht-lenkbaren Achse 8 angeordnet ist. Die Lenkbarkeit dieser lenkbaren Achse 11 ist durch einen Doppelpfeil 12 visualisiert.

Es sei an dieser Stelle darauf hingewiesen, dass die Erfindung nicht auf ein Anhängegerät mit einer nicht-lenkbaren Achse 8 beschränkt ist. Vielmehr kann die Erfindung auch bei einem Anhängegerät zum Einsatz kommen, welches keine nicht-lenkbare Achse, sondern ausschließlich mindestens eine lenkbare Achse aufweist. Die Erfindung ist jedoch besonders vorteilhaft an einem Anhängegerät 3 einsetzbar, welches mindestens eine nicht-lenkbare Achse und mindestens eine lenkbare Achse aufweist.

Das Anhängegerät 3 verfügt weiterhin über eine Steuerungseinrichtung 13. Mit der Steuerungseinrichtung 13 kann im aktiven Lenkbetrieb des Anhängegeräts 3 an der oder jeder lenkbaren Achse 9 und/oder 11 des Anhängegeräts 3 automatisch ein Lenkwinkel eingestellt werden, und zwar vorzugsweise abhängig vom Signal eines Deichselwinkelsensors 14, mit Hilfe dessen ein Winkel messtechnisch erfasst werden kann, den eine nicht gezeigte Längsmittelachse des Zugfahrzeugs 2 und eine ebenfalls nicht gezeigte Längsmittelachse des Anhängegeräts 3 miteinander einschließen. Je größer dieser Winkel ist, desto enger ist ein Kurvenradius bei der Kurvenfahrt des Zuggespanns 1.

Um den Lenkwinkel an der oder jeder lenkbaren Achse 9 und/oder 11 des Anhängegeräts 3 abhängig vom Signal des Deichselwinkelsensors 14 mit hoher Qualität einstellen zu können, ist eine Kalibrierung zumindest des landwirtschaftlichen Anhängegeräts 3 bzw. des landwirtschaftlichen Zuggespanns 1 aus dem Zugfahrzeug 2 und dem Anhängegerät 3 erforderlich, wobei zumindest die Positionen für die Endanschläge der oder jeder lenkbaren Achse 9 und/oder 11 des Anhängegeräts 3 und eine Position für die Geradeausfahrt der oder jeder lenkbaren Achse 9 und/oder 11 des Anhängegeräts 3 kalibriert werden.

Zur Kalibrierung zumindest der Positionen für die Endanschläge der oder jeder lenkbaren Achse 9 und/oder 11 des Anhängegeräts 3 und für die Geradeausfahrt der oder jeder lenkbaren Achse 9 und/oder 11 des Anhängegeräts 3 wird erfindungsgemäß so vorgegangen, dass zunächst im Stillstand des Anhängegeräts 3 automatisch über die Steuerungseinrichtung 13 die Endanschläge der oder jeder lenkbaren Achse 9 und/oder 11 des Anhängegeräts 3 angefahren werden, nämlich die Endanschläge für ein maximales Linkslenken sowie ein maximales Rechtslenken an der jeweiligen lenkbaren Achse 9 und/oder 11 des Anhängegeräts 3.

Die Positionen dieser Endanschläge werden mit Hilfe eines der jeweiligen lenkbaren Achse 9 und/oder 11 zugeordneten Achswinkelsensors 15 bzw. 16 automatisch erfasst, wobei zum automatischen Anfahren der Endanschläge die Steuerungseinrichtung 13 Stellsignale für einen Lenkzylinder 17 bzw. 18 der jeweiligen Achse 9 und/oder 11 bereitstellt.

Dann, wenn im Stillstand des Anhängegeräts 3 demnach durch Ansteuerung des Lenkzylinders 17 und/oder 18 der oder jeder lenkbaren Achse 9 und/oder 11 die Endanschläge an der jeweiligen lenkbaren Achse 9 und/oder 11 angefahren werden, ist die Position dieser Endanschläge über die Achswinkelsensoren 15 und/oder 16 automatisch ermittelbar, wobei mit diesen über die Achswinkelsensoren 15 und/oder 16 erfassten Positionen die Positionen der Achswinkelsensoren 15 und/oder 16 bezüglich der Endanschläge der jeweiligen lenkbaren Achse 9 und/oder 11 automatisch kalibriert werden.

Für die oder jede lenkbare Achse 9 und/oder 11 wird weiterhin über die Steuerungseinrichtung 13, abhängig von den über die Achswinkelsensoren 15 und/oder 16 erfassten Positionen der Endanschläge, über eine Mittelwertbildung der Positionen der Endanschläge für die jeweilige gelenkte Achse 9 und/oder 11 eine vorläufige Position für die Geradeausfahrt automatisch ermittelt.

Nachfolgend wird während einer Geradeausfahrt des Anhängegeräts 3 in einer Ebene bzw. bei ebener Fahrbahn die oder jede lenkbare Achse 9 und/oder 11 von der Steuerungseinrichtung 13 derart freigegeben, dass die jeweilige lenkbare Achse 9 und/oder 11 nicht mehr aktiv gelenkt wird, sondern sich vielmehr bedingt durch fahrdynamische Kräfte wie Trägheitskräfte während der Geradeausfahrt passiv an der jeweiligen lenkbaren Achse 9 und/oder 11 ein Einspuren einstellt.

Nach diesem passiven Einspuren der oder jeder lenkbaren Achse 9 und/oder 11 bzw. nach dem Freigeben derselben wird eine endgültige Position für die Geradeausfahrt zur Kalibrierung automatisch ermittelt, wobei diese endgültige Position für die Geradeausfahrt wiederum über den jeweiligen Achswinkelsensor 15 bzw. 16 der jeweiligen Achse 9 bzw. 11 automatisch ermittelt wird, nämlich derart, dass mit dieser Position der jeweilige Achswinkelsensor 15 bzw. 16 bezüglich der Geradeausfahrt der jeweiligen lenkbaren Achse 9 bzw. 11 automatisch kalibriert wird.

Die Kalibrierung der Positionen für die Endanschläge und die Geradeausfahrt der oder jeder lenkbaren Achse erfolgt demnach zweistufig derart, dass im Stillstand des Anhängegeräts 3 die Endanschläge der jeweiligen lenkbaren Achse kalibriert werden, und dass während einer Geradeausfahrt des Anhängegeräts 3 die Position für die Geradeausfahrt der jeweiligen lenkbaren Achse 9, 11 kalibriert wird.

Nach einer vorteilhaften Weiterbildung der Erfindung ist weiterhin vorgesehen, ferner eine Position der Zugdeichsel 4 für die Geradeausfahrt des Anhängegeräts 3 automatisch zu kalibrieren, nämlich derart, dass insbesondere während einer Geradeausfahrt des Zuggespanns 1 eine Position der Zugdeichsel 4 für die Geradeausfahrt mit Hilfe des Deichselwinkelsensors 14 automatisch erfasst wird, wobei mit dieser automatisch erfassten Position der Deichselwinkelsensor 14 bezüglich der Geradeausfahrt des Anhängegeräts 3 automatisch kalibriert wird.

Durch die Kalibrierung des Deichselsensors können Toleranzen/Abweichungen am Anhängebock oder an der Ankoppelstelle des Deichselsensors besonders vorteilhaft kompensiert werden. Solche mechanischen Toleranzen bzw. Abweichungen führen ansonsten dazu, dass ein Anhänger oder ein Anhängegerät nicht in der Spur des Zugfahrzeugs nachlaufen, was zu erhöhtem Reifenverschleiß führt. Solche Abweichungen ergeben sich insbesondere wenn ein Anhänger oder ein Anhängegerät von verschiedenen Zugfahrzeugen, wie Schleppern oder Traktoren, gezogen wird. In diesem Fall kann der Deichselsensor mit dem erfindungsgemäßen Verfahren auf einfachste Weise nachjustiert bzw. kalibriert werden und somit auf jedes Zugfahrzeug optimal angepasst werden.

Diese Kalibrierung der Zugdeichsel 4 bzw. des Deichselwinkelsensors 14 erfolgt vorzugsweise zusammen mit der Kalibrierung der Positionen für die Geradeausfahrt an der oder jeder lenkbaren Achse 9 bzw. 11 des Anhängegeräts 3. Hierbei ist dann die oder jede lenkbare Achse 9 und/oder 11 des Anhängegeräts 3 von der Steuerungseinrichtung 13 freigegeben, sodass die oder jede lenkbare Achse 9 und/oder 11 während der Geradeausfahrt passiv einspuren kann.

Das oben beschriebene Verfahren zur Kalibrierung wird von der Steuerungseinrichtung 13 automatisch durchgeführt, wozu die Steuerungseinrichtung 13 Mittel zur Durchführung des Verfahrens aufweist, wobei es sich bei diesen Mitteln insbesondere um Datenschnittstellen handelt, um mit den an der Ausführung des erfindungsgemäßen Verfahrens beteiligten Baugruppen Daten auszutauschen, sowie um einen Prozessor zur Datenverarbeitung sowie einen Speicher zur Datenspeicherung. Kalibrierte Positionen der Endanschläge und der Geradeausfahrt werden in der Steuerungseinrichtung 13 automatisch gespeichert.

Die Erfindung erlaubt eine einfache und zuverlässige Kalibrierung eines Anhängegeräts 3 eines landwirtschaftlichen Zuggespanns 1 automatisiert, ohne Hilfsmittel, zuverlässig, innerhalb kürzester Zeit. Bedienfehler bei der Kalibrierung können vermieden werden. Ein Landwirt bzw. ein Benutzer kann die Kalibrierung selbst steuerungsseitig auslösen, nämlich einerseits die Kalibrierung der Positionen für die Endanschläge im Stillstand des Anhängegeräts und andererseits die Kalibrierung der Position für die Geradeausfahrt des Anhängegeräts während einer Geradeausfahrt desselben.

Unter Bezugnahme auf Fig. 1 und 2 wurde die Erfindung am Beispiel eines landwirtschaftlichen Zuggespanns 1 aus einem landwirtschaftlichen, selbstfahrenden Zugfahrzeug 2 und einem vom Zugfahrzeug 2 gezogenen, landwirtschaftlichen Anhängegerät 3 beschrieben. Es sei an dieser Stelle darauf hingewiesen, dass die Erfindung auch bei nicht-landwirtschaftlichen Zuggespannen bzw. Anhängegeräten zum Einsatz kommen kann, so z.B. bei forstwirtschaftlichen Zuggespannen und Zuggespannen der Bauindustrie.

Ferner kann die Erfindung auch an einem selbstfahrenden Nutzfahrzeug wie z.B. einem Schlepper, einem Traktor, einer Forstmaschine oder einen LKW ohne Anhängegerät zum Einsatz kommen. Dann, wenn ein solches selbstfahrendes Nutzfahrzeug mehrere lenkbare Achsen aufweist, werden die lenkbaren Achsen bezogen auf die Geradeausfahrt jeweils für sich genommen derart nacheinander kalibriert, dass während einer Geradeausfahrt des Nutzfahrzeugs in einer Ebene jeweils eine lenkbare Achse des Nutzfahrzeugs freigegeben während die oder jede andere lenkbare Achse bezogen auf die Geradeausfahrt festgesetzt wird, sodass während der Geradeausfahrt die jeweilige freigegebene Achse passiv einspurt.

Unter einer Ebene bzw. einer ebenen Fahrbahn im Sinne des erfindungsgemäßen Verfahrens ist eine Fläche zu verstehen, die weder quer zur Fahrtrichtung geneigt ist noch ein Gefälle quer zur Fahrtrichtung aufweist.

### Bezugszeichenliste

- 1: Zuggespann
- 2: Zugfahrzeug
- 3: Anhängegerät
- 4: Zugdeichsel
- 5: Achse
- 6: Achse
- 7: Doppelpfeil
- 8: Achse
- 9: Achse
- 10: Doppelpfeil
- 11: Achse
- 12: Doppelpfeil
- 13: Steuerungseinrichtung
- 14: Deichselwinkelsensor
- 15: Achswinkelsensor
- 16: Achswinkelsensor
- 17: Lenkzylinder
- 18: Lenkzylinder

## Patentansprüche

1. Verfahren zur Kalibrierung eines gezogenen oder selbstfahrenden Nutzfahrzeugs mit mindestens einer lenkbaren Achse oder eines Gespanns aus einem selbstfahrenden, als Zugfahrzeug ausgebildeten Nutzfahrzeug und einem gezogenen, als Anhängegerät ausgebildeten Nutzfahrzeug mit mindestens einer lenkbaren Achse, nämlich zur Kalibrierung zumindest der Positionen für die Endanschläge und für die Geradeausfahrt der oder jeder lenkbaren Achse des Nutzfahrzeugs , **dadurch gekennzeichnet, dass**
im Stillstand des Nutzfahrzeugs die Endanschläge der oder jeder lenkbaren Achse des Nutzfahrzeugs automatisch angefahren und die Positionen dieser Endanschläge zur Kalibrierung automatisch ermittelt werden;
für die oder jede lenkbare Achse des Nutzfahrzeugs aus den Positionen der Endanschläge durch eine Mittelwertbildung eine vorläufige Position für die Geradeausfahrt der jeweiligen lenkbaren Achse automatisch ermittelt wird;
dann, wenn während einer Geradeausfahrt des Nutzfahrzeugs in einer Ebene die oder jede lenkbare Achse des Nutzfahrzeugs derart freigegeben ist, dass dieselbe während der Geradeausfahrt passiv einspurt, eine endgültige Positionen für die Geradeausfahrt der jeweiligen lenkbaren Achse zur Kalibrierung automatisch ermittelt wird.

2. Verfahren nach Anspruch 1, **dadurch gekennzeichnet, dass** im Stillstand die Positionen der Endanschläge über einen Achswinkelsensor der jeweiligen lenkbaren Achse automatisch ermittelt werden, und dass mit diesen Positionen der jeweilige Achswinkelsensor bezüglich der Endanschläge der jeweiligen lenkbaren Achse automatisch kalibriert wird.

3. Verfahren nach Anspruch 2, **dadurch gekennzeichnet, dass** während einer Geradeausfahrt die endgültige Position für die Geradeausfahrt über den Achswinkelsensor der jeweiligen lenkbaren Achse automatisch ermittelt wird, und dass mit dieser Position der jeweilige Achswinkelsensor bezüglich der Geradeausfahrt der jeweiligen lenkbaren Achse automatisch kalibriert wird.

4. Verfahren nach einem der Ansprüche 1 bis 3, **dadurch gekennzeichnet, dass** ferner eine Position einer Zugdeichsel für die Geradeausfahrt eines gezogenen Anhängegeräts zur Kalibrierung automatisch ermittelt wird.

5. Verfahren nach Anspruch 4, **dadurch gekennzeichnet, dass** dann, wenn während einer Geradeausfahrt die oder jede lenkbare Achse des Anhängegeräts freigegeben ist, eine Position der Zugdeichsel für die Geradeausfahrt mit einem Deichselwinkelsensor automatisch ermittelt wird, und dass mit dieser Position der Deichselwinkelsensor bezüglich der Geradeausfahrt des Anhängegeräts automatisch kalibriert wird.

## Claims

1. A method of calibrating a towed or self-propelled utility vehicle having at least one steerable axle or an assembly comprising a self-propelled utility vehicle in the form of a towing vehicle and a towed utility vehicle in the form of a trailer device having at least one steerable axle, more specifically for calibrating at least the positions for the end stops and for straight-ahead travel of the or each steerable axle of the utility vehicle, **characterised in that**
in the stopped condition of the utility vehicle the end stops of the or each steerable axle of the utility vehicle are automatically encountered and the positions of those end stops are automatically ascertained for calibration purposes;
for the or each steerable axle of the utility vehicle a provisional position for straight-ahead travel of the respective steerable axle is automatically ascertained from the positions of the end stops by averaging; and
when during a straight-ahead travel of the utility vehicle in a plane the or each steerable axle of the utility vehicle is released in such a way that it passively tracks during the straight-ahead travel, a definitive position for the straight-ahead travel of the respective steerable axle is automatically ascertained for calibration purposes.

2. A method according to claim 1 **characterised in that** in the stopped condition the positions of the end stops are automatically ascertained by way of an axle angle sensor of the respective steerable axle and the respective axle angle sensor is automatically calibrated with those positions in respect of the end stops of the respective steerable axle.

3. A method according to claim 2 **characterised in that** during a straight-ahead travel the definitive position for straight-ahead travel is automatically ascertained by way of the axle angle sensor of the respective steerable axle and with that position the respective axle angle sensor is automatically calibrated in respect of straight-ahead travel of the respective steerable axle.

4. A method according to one of claims 1 to 3 **characterised in that** in addition a position of a drawbar for straight-ahead travel of a towed trailer device is automatically ascertained for calibration purposes.

5. A method according to claim 4 **characterised in that** when during a straight-ahead travel the or each steerable axle of the trailer device is released a position of the drawbar is automatically ascertained for the straight-ahead travel with a drawbar angle sensor and that the drawbar angle sensor is automatically calibrated with that position in respect of the straight-ahead travel of the trailer device.

## Revendications

1. Procédé d'étalonnage d'un véhicule utilitaire tracté ou autoporteur, comprenant au moins un essieu orientable, ou d'un attelage composé d'un véhicule utilitaire automoteur, réalisé comme véhicule tracteur, et d'un véhicule utilitaire tracté, réalisé comme appareil remorqué, comprenant au moins un essieu orientable, à savoir en vue de l'étalonnage au moins des positions pour les butées de fin de course et pour le déplacement en ligne droite de l'essieu orientable ou de chaque essieu orientable du véhicule utilitaire, **caractérisé en ce que**
à l'arrêt du véhicule utilitaire, les butées de fin de course de l'essieu orientable ou de chaque essieu orientable du véhicule utilitaire sont approchées automatiquement et les positions de ces butées de fin de course sont déterminées automatiquement en vue de l'étalonnage ;
on détermine automatiquement pour l'essieu orientable ou pour chaque essieu orientable du véhicule utilitaire, par formation de la valeur moyenne à partir des positions des butées de fin de course, une position provisoire pour le déplacement en ligne droite de l'essieu orientable respectif ;
ensuite, lorsque, pendant un déplacement en ligne droite du véhicule utilitaire dans un plan, l'essieu orientable ou chaque essieu orientable du véhicule utilitaire est libéré de manière à ce qu'il se positionne de façon passive sur la voie, on détermine automatiquement une position définitive pour le déplacement en ligne droite de l'essieu orientable respectif, en vue de l'étalonnage.

2. Procédé selon la revendication 1, **caractérisé en ce que,** à l'arrêt, les positions des butées de fin de course sont déterminées automatiquement par l'intermédiaire d'un capteur d'angle d'essieu de l'essieu orientable respectif, et **en ce que**, avec ces positions, le capteur d'angle d'essieu respectif est étalonné automatiquement par rapport aux butées de fin de course de l'essieu orientable respectif.

3. Procédé selon la revendication 2, **caractérisé en ce que,** pendant un déplacement en ligne droite, on détermine automatiquement la position définitive pour le déplacement en ligne droite, par l'intermédiaire du capteur d'angle d'essieu de l'essieu orientable respectif, et **en ce que**, avec cette position, le capteur d'angle d'essieu respectif est étalonné automatiquement par rapport au déplacement en ligne droite de l'essieu orientable respectif.

4. Procédé selon une des revendications 1 à 3, **caractérisé en ce que** l'on détermine en outre automatiquement une position d'un timon de traction pour le déplacement en ligne droite d'un appareil remorqué tracté, en vue de l'étalonnage.

5. Procédé selon la revendication 4, **caractérisé en ce que,** lorsque, pendant un déplacement en ligne droite, l'essieu orientable ou chaque essieu orientable de l'appareil remorqué est libéré, on détermine automatiquement une position du timon de traction pour le déplacement en ligne droite, à l'aide d'un capteur d'angle de timon, et **en ce qu'**avec cette position, le capteur d'angle de timon est étalonné automatiquement par rapport au déplacement en ligne droite de l'appareil remorqué.
